# EUROPEAN PATENT APPLICATION

(11) **EP 4 640 407 A1**
(43) Date of publication of application: **29.10.2025**
(21) Application number: 23907145.9
(22) Date of filing: 21.12.2023
(51) Int. Cl.: B29C 49/06, B29B 11/08, B29B 11/14, B29C 49/48, B29C 49/64

(54) **PREFORM, INJECTION MOLDING MOLD, TEMPERATURE CONTROLLING MOLD, RESIN CONTAINER MANUFACTURING METHOD, AND RESIN CONTAINER MANUFACTURING DEVICE**

(30) Priority: 21.12.2022 JP 2022204380
(71) Applicant: Nissei ASB Machine Co., Ltd., Komoro-shi, Nagano 384-8585 (JP)
(72) Inventor: TAKAHASHI, Junji, Komoro-shi, Nagano 384-8585 (JP); OGIHARA, Manabu, Komoro-shi, Nagano 384-8585 (JP); USAMI, Masayuki, Komoro-shi, Nagano 384-8585 (JP)
(74) Representative: Novagraaf International SA
(86) International application number: PCT/JP2023/045980
(87) International publication number: WO 2024/135785

(57) **Abstract**

A preform (20) manufactured by an injection molding section (110) of a blow molding apparatus in a hot parison method and blow-molded into a resin container by a blow molding section (130) includes a neck portion (21) that forms an opening of the preform (20); a body portion (22) that is connected to the neck portion (21); and a bottom portion (23) that is connected to the body portion (22) and closes one end of the preform (20). The body portion (22) includes a connecting portion (22a) connected to the neck portion (21) and a narrow body portion (22b) formed with a smaller diameter than the neck portion (21). The neck portion (21) and the connecting portion (22a), and the connecting portion (22a) and the narrow body portion (22b) are connected in an L-shape and form a step portion (22c).

## Description

### TECHNICAL FIELD

The present disclosure relates to a preform, an injection molding mold, a temperature adjusting mold, a resin container manufacturing method, and a resin container manufacturing apparatus.

### BACKGROUND ART

Patent Literature 1 discloses a preform provided for manufacturing a resin container.

### CITATION LIST

### PATENT LITERATURE

Patent Literature 1: JP 04-034925 B

### SUMMARY OF INVENTION

### TECHNICAL PROBLEM

A shape of a preform is to be appropriately selected or designed to match the shape of a resin container. When the shape of a preform is not appropriate, molding defects such as a thickness distribution defect are likely to occur at a predetermined portion of the resin container in the molding process.

The present disclosure aims to provide a preform with suppressed occurrence of molding defects, an injection molding mold, a temperature adjusting mold, a resin container manufacturing method, and a resin container manufacturing apparatus.

### SOLUTION TO PROBLEM

A preform according to an aspect of the present disclosure is a preform that is manufactured by an injection molding section of a blow molding apparatus in a hot parison method and is blow-molded into a resin container by a blow molding section, the preform including a neck portion that forms an opening of the preform, a body portion that is connected to the neck portion, and a bottom portion that is connected to the body portion and closes one end of the preform, in which the body portion includes a connecting portion connected to the neck portion and a narrow body portion formed with a smaller diameter than the neck portion, and the neck portion and the connecting portion, and the connecting portion and the narrow body portion are connected in an L-shape and form a step portion.

An injection molding mold according to an aspect of the present disclosure is an injection molding mold that is used to manufacture a preform with an injection molding section of a blow molding apparatus in a hot parison method, in which an injection cavity formed by the injection molding mold includes a neck forming portion that forms a neck portion of the preform, a body-portion forming portion that forms a body portion connected to the neck portion, and a bottom-portion forming portion that forms a bottom portion that is connected to the body portion and closes one end of the preform, the body-portion forming portion includes a connecting-portion forming portion connected to the neck forming portion, and a narrow-body-portion forming portion formed to be narrower than the neck forming portion, and the neck forming portion and the connecting-portion forming portion, and the connecting-portion forming portion and the narrow-body-portion forming portion are connected in an L-shape and form a step-portion forming portion.

A temperature adjusting mold according to an aspect of the present disclosure is a temperature adjusting mold for adjusting a temperature of the above-described preform to a temperature suitable for blow molding, the temperature adjusting mold including a heater provided to cover at least the connecting portion, and a cooling section provided closer to a bottom portion than to the heater.

A manufacturing method for a resin container according to an aspect of the present disclosure is a manufacturing method for manufacturing a resin container by blow-molding the above-described preform in a hot parison method, the manufacturing method including an injection molding step of injecting a molten resin into an injection cavity formed by an injection molding mold and forming the preform, a temperature adjusting step of adjusting a temperature of the preform to a temperature suitable for blow molding, and a blow molding step of blow-molding the preform whose temperature has been adjusted.

A manufacturing apparatus for a resin container according to an aspect of the present disclosure is a manufacturing apparatus for manufacturing a resin container by blow-molding a preform in a hot parison method, the manufacturing apparatus including an injection molding section that injects a molten resin into the injection cavity formed by the above-described injection molding mold and forms the preform, a temperature adjusting section that includes a temperature adjusting mold and adjusts a temperature of the preform to a temperature suitable for blow molding, and a blow molding section that blow-molds the preform whose temperature has been adjusted.

### ADVANTAGEOUS EFFECTS OF INVENTION

According to the present disclosure, a preform that reduces the occurrence of molding defects, an injection molding mold, a temperature adjusting mold, a resin container manufacturing method, and a resin container manufacturing apparatus can be provided.

### BRIEF DESCRIPTION OF DRAWINGS

FIG. 1 is a block diagram of a manufacturing apparatus for a resin container according to the present embodiment.
FIG. 2 is a perspective view of a preform according to the present embodiment.
FIG. 3 is a perspective view of a resin container according to the present embodiment.
FIG. 4 is a diagram illustrating an injection molding section.
FIG. 5 is a diagram illustrating a temperature adjusting section.
FIG. 6 is a diagram illustrating a blow molding section.
FIG. 7 is a diagram illustrating a manufacturing method for the resin container.

### DESCRIPTION OF EMBODIMENTS

Hereinafter, as an embodiment of the present disclosure, a manufacturing apparatus 100 and a manufacturing method for resin containers will be described with reference to the drawings. The dimensions of each member illustrated in the drawings may differ from the actual dimensions of each member for convenience of description.

Furthermore, for convenience of description, "up-down direction" will be referred to as appropriate. Here, the "up-down direction" is a direction including an "upward direction" and a "downward direction". A reference sign U illustrated in the drawings described below denotes the upward direction. A reference sign D denotes the downward direction. Unless otherwise specified, the direction in which openings of a preform and a resin container are provided will be described as the upward direction.

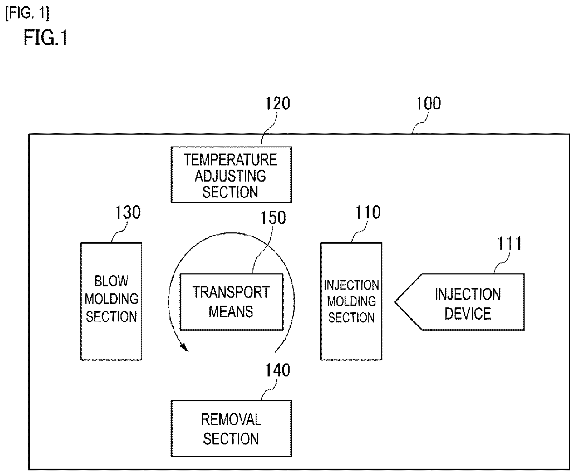

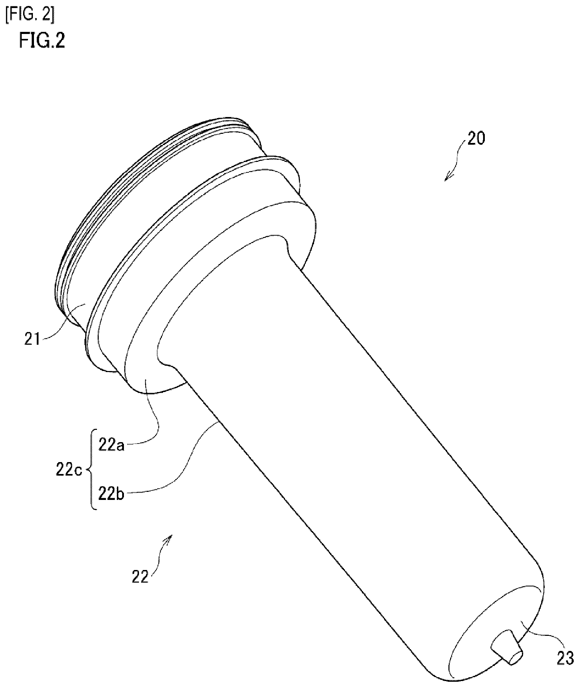

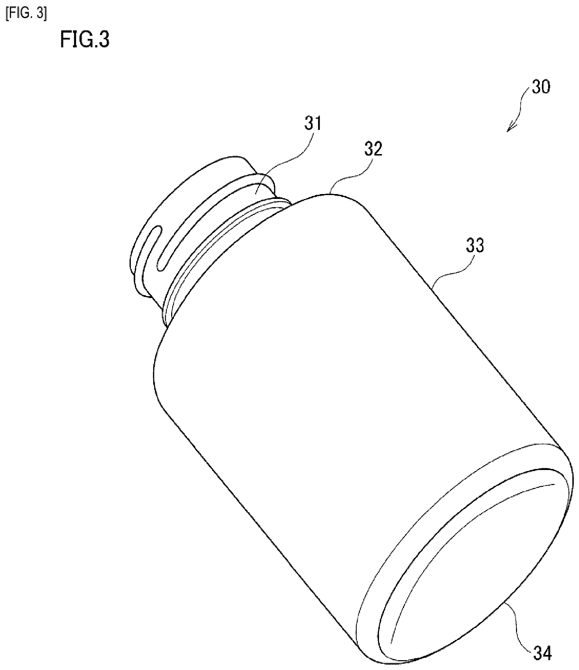

FIG. 1 is a block diagram of a manufacturing apparatus 100 of a resin container 30 (see FIG. 3) according to the present embodiment. The manufacturing apparatus 100 manufactures the resin container 30 by blow molding a preform 20 (see FIG. 2) in a hot parison method. The manufacturing apparatus 100 includes an injection molding section 110, a temperature adjusting section 120, a blow molding section 130, and a removal section 140, as illustrated in FIG. 1. The injection molding section 110 manufactures the preform 20 to be described below with a molten resin injected from an injection device 111. The temperature adjusting section 120 adjusts the temperature of the preform 20 to a temperature suitable for blow molding. The blow molding section 130 manufactures the resin container 30 by blow-molding the preform 20. The removal section 140 removes the resin container 30 manufactured by the blow molding section 130. A material constituting the preform 20 or the resin container 30 is a thermoplastic synthetic resin. The material can be selected from, for example, polyethylene terephthalate (PET), polyethylene naphthalate (PEN), polycyclohexane dimethylene terephthalate (PCTA), Tritan (trade name; a copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate (PMMA, acrylic), polylactic acid (PLA), and the like. Note that, for the material of the preform 20 and the resin container 30 of the present embodiment, PET is most preferred.

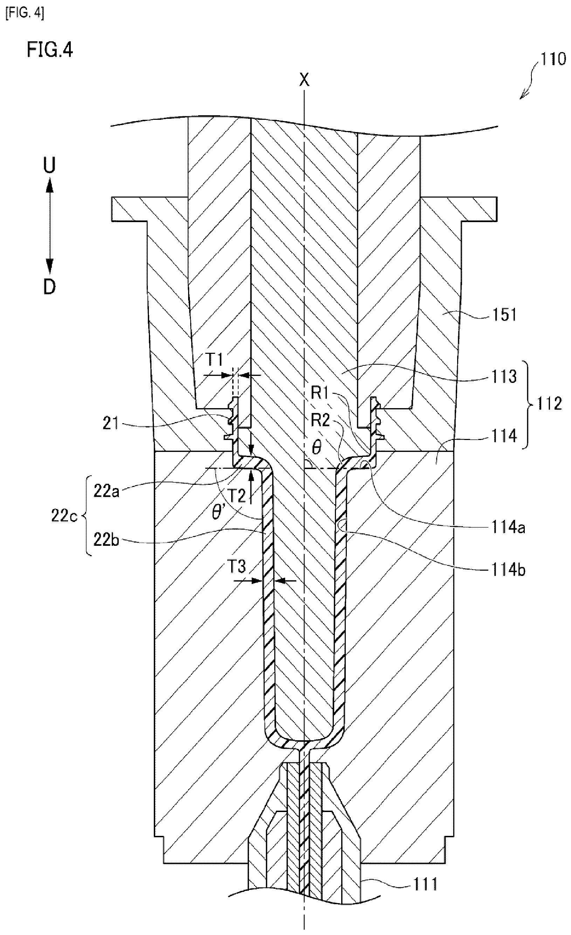

The injection molding section 110, the temperature adjusting section 120, the blow molding section 130, and the removal section 140 are provided at positions obtained by rotation by a predetermined angle about a transport means 150. In the present embodiment, the predetermined angle is 90 degrees. The transport means 150 includes a rotating plate, which is not illustrated. A neck mold 151 (see FIG. 4), which will be described below, is attached to the rotating plate. The rotating plate is configured to rotate with the neck mold 151 holding the preform 20, thereby transporting the preform 20 to each of the injection molding section 110, the temperature adjusting section 120, the blow molding section 130, and the removal section 140. Note that the resin container 30 may be transported only between the two sections of the blow molding section 130 and the removal section 140.

FIG. 2 is a perspective view of the preform 20 according to the present embodiment. The preform 20 includes a neck portion 21, a body portion 22, and a bottom portion 23 as illustrated in FIG. 2. The neck portion 21 forms an opening of the resin container. The body portion 22 is connected to the neck portion 21. The body portion 22 is blow-molded to form the side surface of the resin container. The bottom portion 23 is connected to the body portion 22. The bottom portion 23 closes one end of the preform 20 and is blow-molded to form the bottom surface of the resin container 30.

The body portion 22 includes a connecting portion 22a connected to the neck portion 21 and a narrow body portion 22b formed to have a smaller diameter than the neck portion 21. The lower part of the neck portion 21 and the connecting portion 22a, and the connecting portion 22a and the upper portion of the narrow body portion 22b are connected in an L-shape and form a step portion (recessed portion) 22c. An angle θ formed by the central axis X of the preform 20 and an extension line from the outer surface of the connecting portion 22a preferably ranges from 70° to 90°, and more preferably from 80° to 89° (see FIG. 4). Furthermore, an angle θ' formed by a line from the outer surface of the connecting portion 22a (a line from the lower surface) and a line from the outer surface of the narrow body portion 22b (a line from the side surface) of the preform 20 ranges from 90° to 110°, and more preferably 91° to 100° (see FIG. 4).

FIG. 3 is a perspective view of the resin container 30. The resin container 30 has a container neck portion 31, a container shoulder portion 32, a container body portion 33, and a container bottom portion 34. The container neck portion 31 is a portion formed by the neck portion 21 of the preform 20 and forms an opening of the resin container 30. The container shoulder portion 32 is a portion formed by a part of the body portion 22 of the preform 20 (a part of the body portion 22 on the neck portion 21 side) and is connected to the container neck portion 31. The container body portion 33 is a portion formed by a part of the body portion 22 of the preform 20 (a part of the body portion 22 on the bottom portion 23 side) and is connected to the container shoulder portion 32. The container bottom portion 34 is a portion formed by the bottom portion 23 of the preform 20 and is connected to the container body portion 33. The container shoulder portion 32 is formed to increase in diameter toward the container bottom portion 34.

FIG. 4 illustrates the injection molding section 110. The injection molding section 110 includes an injection molding mold 112. The injection molding mold 112 forms an injection cavity (molding space). The injection molding mold 112 includes an injection molding core 113 and an injection cavity mold 114. In addition, the injection molding mold 112 may also include the neck mold 151 which is also a part of the transport means 150 during molding (temporarily). The injection molding core 113 defines mainly an injection cavity corresponding to the inner wall surface of the preform 20. The injection cavity mold 114 defines, together with the neck mold 151, an injection cavity corresponding to the outer wall surface of the preform 20. Specifically, the neck mold 151 defines the injection cavity corresponding to the outer wall surface of the neck portion 21 of the preform 20, and the injection cavity mold 114 defines the injection cavity corresponding to the outer wall surface of the body portion 22 of the preform 20. The neck mold 151 is an example of a neck forming portion. The injection cavity mold 114 is an example of a body-portion forming portion and a bottom-portion forming portion. The injection cavity mold 114, which is a body-portion forming portion, includes a connecting-portion forming portion 114a and a narrow-body-portion forming portion 114b. The narrow-body-portion forming portion 114b is formed to be narrower (smaller in diameter) than the injection cavity surface of the neck mold 151. The neck mold 151 and the connecting-portion forming portion 114a, and the connecting-portion forming portion 114a and the narrow-body-portion forming portion 114b are connected in an L-shape (substantially at a right angle) and form a step-portion forming portion. The line indicating the outer shapes of the neck mold 151, the connecting-portion forming portion 114a, and the narrow-body-portion forming portion 114b is crank-shaped. The angle of the connecting-portion forming portion 114a with respect to the central axis X of the preform 20 preferably ranges from 70° to 90°, and more preferably ranges from 80° to 89°. In addition, the angle formed by the line from the outer shape of the connecting-portion forming portion 114a and the line of the outer shape of the narrow-body-portion forming portion 114b preferably ranges from 90° to 110°, and more preferably ranges from 91° to 100°.

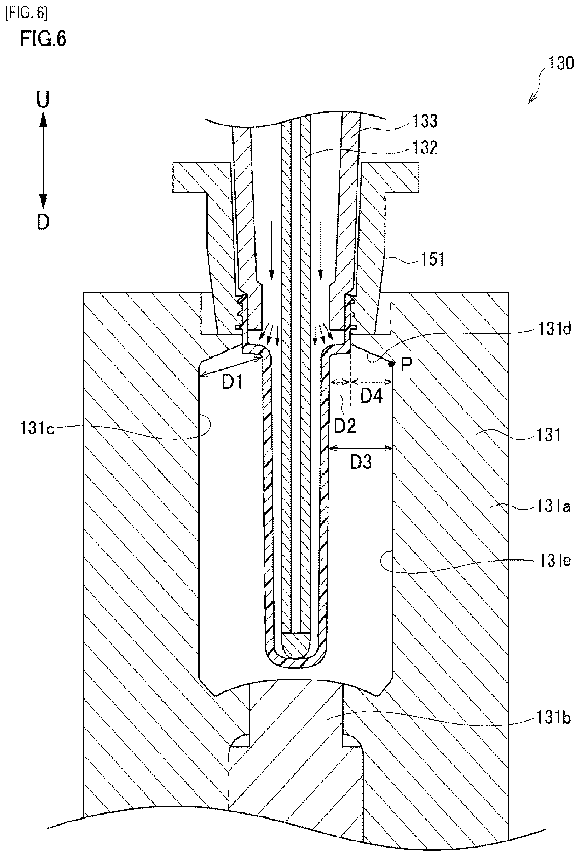

The preform 20 further has features relating to thickness distribution and shape as illustrated in FIG. 4. A thickness of the substantially vertical wall portion (excluding the screw portion) forming the neck portion 21 is denoted by T1, a thickness of the substantially horizontal wall portion forming the connecting portion 22a is denoted by T2, and a thickness of the substantially tapered wall portion forming the narrow body portion 22b is denoted by T3. In that case, at least the relationship (condition) of T2 > T1 may be satisfied, and the relationship of T3 ≥ T2 > T1 may also be satisfied. Further, on the inner surface of the preform 20, when the curvature radius of the curved portion connecting the neck portion 21 and the connecting portion 22a is set to R1 and the curvature radius of the curved portion connecting the connecting portion 22a and the narrow body portion 22b is set to R2, the relationship R2 > R1 is satisfied. Further, the diameter of the inner wall surface 131c of the blow cavity (the diameter of the container body portion 33; see FIG. 6) with respect to the diameter of the narrow body portion 22b is preferably set to 2 times to 4 times or less, and more preferably set to 2.6 times to 3.7 times or less (the lateral stretch ratio of the narrow body portion 22b of the preform 20 is preferably set to 2 to 4 times, and more preferably set to 2.6 to 3.7 times). In addition, as illustrated in FIG. 6, when the length of the connecting portion 22a in the radial direction is denoted by D2, the length from the outer surface of the narrow body portion 22b to a body-portion forming portion 131e (container body portion 33) in the radial direction is denoted by D3, and the radial length from the end face of the connecting portion 22a (or neck portion 21) in the outer radial direction to the length of a shoulder-portion forming portion 131d in the radial direction (diameter of the container shoulder portion) is denoted by D4, the relationships of D3 > D2 and D4 > D2 are satisfied. In addition, the lower end position of the connecting portion 22a is preferably set to a position higher than the lower end position P of the shoulder-portion forming portion 131d (container shoulder portion 32) and the upper end position of the body-portion forming portion 131e (body portion 22).

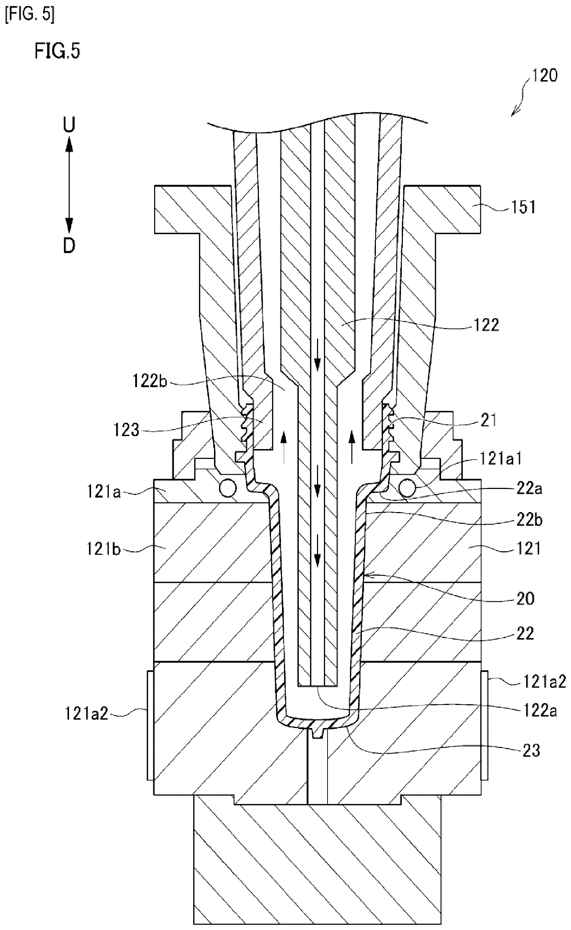

FIG. 5 illustrates the temperature adjusting section 120. The temperature adjusting section 120 includes a temperature adjusting mold member. The temperature adjusting mold member includes a temperature adjusting mold (temperature adjusting pot mold) 121, a cooling rod (hollow rod member, temperature adjusting rod) 122, and a fitting core 123. In addition, the temperature adjusting mold member may also include the neck mold 151 which is also a part of the transport means 150 during molding (temporarily). The inner wall surface of the temperature adjusting mold 121 forms a temperature adjusting cavity (molding space). The temperature adjusting cavity corresponds to the shape of the outer wall surface of the preform 20. The cooling rod 122 is configured to be displaceable in the up-down direction. A first air flowing port 122a is formed at the tip of the cooling rod 122. The first air flowing port 122a is configured to introduce (supply) or discharge (exhaust) compressed air through the interior of the cooling rod 122. A second air flowing port 122b is formed between the outer surface of the cooling rod 122 and the inner surface of the fitting core 123. The second air flowing port 122b is also configured to introduce (supply) or discharge (exhaust) compressed air.

The temperature adjusting mold 121 includes a heater (heating section) 121a and a cooling section 121b. The heater 121a is provided to cover at least the connecting portion 22a. The cooling section 121b is provided closer to the bottom portion 23 than the heater 121a. The heater 121a may be configured to be, for example, a ring heater 121a1 and disposed above the temperature adjusting mold 121 (the portion including the connecting portion 22a and corresponding to the step portion 22c). The heater 121a heats the step-portion forming portion (at least the connecting portion 22a and the adjacent portion) of the preform 20 with radiant heat (radiation heat) from infrared rays or heat transfer resulting from contact with the mold surface. Furthermore, the heater 121a such as a band heater 121a2 may also be provided at a lower portion of the temperature adjusting mold 121 (a portion corresponding to the bottom portion 23). The cooling section 121b may be configured to flow a temperature adjusting medium or a cooling medium through a flow path formed inside the temperature adjusting mold (121. In addition, the temperature of the heater (heating section) 121a is set to be higher than that of the cooling section 121b.

FIG. 6 illustrates the blow molding section 130. The blow molding section 130 includes at least a blow molding mold 131, a stretch rod 132, and a blow core 133 that supplies and exhausts blow air (second compressed air) as blow-molding mold members. In addition, the blow-molding mold members may also include the neck mold 151 which is also a part of the transport means 150 during molding (temporarily). The blow molding mold 131 includes a pair of blow cavity split molds 131a and a bottom mold 131b to be configured to define the shape of the resin container 30 (the inner wall surface 131c of the blow cavity). Each blow cavity split mold 131a includes a shoulder-portion forming portion 131d for defining the container shoulder portion 32 and a body-portion forming portion 131e for defining the container body portion 33. The stretch rod 132 is configured to be displaceable in the up-down direction. The stretch rod 132 is configured to come into contact with the inner surface of the bottom portion 23 of the preform 20 conveyed to the blow molding section 130 to stretch the preform 20 in the downward direction. The blow core 133 is in contact with the neck portion 21 of the preform 20 in an airtight manner, supplies blow air to the preform 20, and exhausts the blow air from the molded resin container 30.

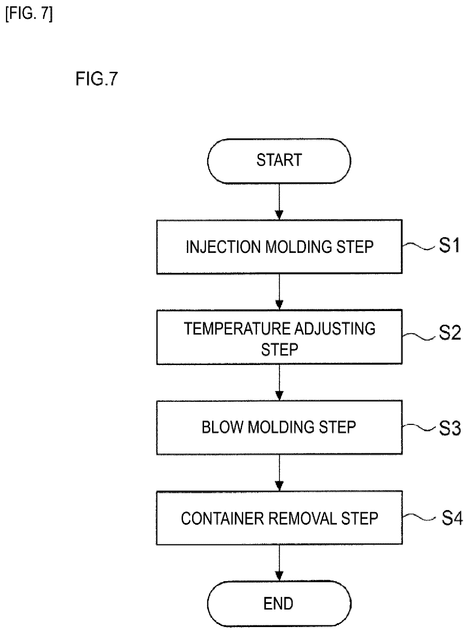

Next, a manufacturing method for a resin container will be described. FIG. 7 is a diagram illustrating the manufacturing method for a resin container. As illustrated in FIG. 7, the manufacturing method for a resin container includes an injection molding step S1, a temperature adjusting step S2, and a blow molding step S3. The manufacturing method of the present embodiment also includes a container removal step S4.

The injection molding step S1 includes injecting a molten resin into the injection cavity formed by the injection molding mold 112 and forming a preform 20 as illustrated in FIG. 4. The molten resin injected from the injection device 111 into the injection cavity is cooled by the injection molding mold 112, and thereby the preform 20 is formed. Here, the connecting-portion forming portion 114a forms the inner wall surface of the injection cavity corresponding to the connecting portion 22a, and the narrow-body-portion forming portion 114b forms the inner wall surface of the injection cavity corresponding to the narrow body portion 22b. Since the neck mold 151 and the connecting-portion forming portion 114a, which are the neck forming portion, and the connecting-portion forming portion 114a and the narrow-body-portion forming portion 114b are connected in an L-shape, the neck portion 21 of the preform 20 and the connecting portion 22a, and the connecting portion 22a and the narrow body portion 22b are also formed to be connected in an L-shape. Therefore, the line indicating the outer shapes of the neck portion 21, the connecting portion 22a, and the narrow body portion 22b of the preform 20 is crank-shaped. In the injection molding step S1, the preform 20 may be released from the injection molding mold 112 at a high temperature. Specifically, during the injection molding of the preform 20, in the cooling step after the completion of a filling step (including the pressure holding step), the cooling time is set to 1/2 or less, preferably 1/3 or less the filling time, more preferably 0 seconds, and the preform 20 is released from the injection molding mold 112 while the retained heat is still high. The preform 20 released from the injection molding mold 112 is conveyed to the temperature adjusting section 120 while being held by the neck mold 151. Note that the magnitude relationship of the gap (space) at each portion of the injection cavity is the same as the magnitude relationship of the thickness of the preform 20 at each portion.

The temperature adjusting step S2 includes adjusting the temperature of the preform 20 to a temperature suitable for blow molding as illustrated in FIG. 5. Specifically, the preform 20 conveyed from the injection molding section 110 to the temperature adjusting section 120 is brought into contact with the temperature adjusting mold 121, and thus the temperature of the preform 20 is adjusted to a temperature suitable for blow molding. In the temperature adjusting step S2, it is desirable that at least the connecting portion 22a is heated. The heater 121a heats at least the connecting portion 22a, and the cooling section 121b cools at least the narrow body portion 22b separated from the connecting portion 22a. The heater 121a can locally suppress a decrease in the amount of heat (decrease in temperature) of the connecting portion 22a attributable to the compressed air, and can locally increase, as necessary, the amount of heat (temperature) of the connecting portion 22a compared to the amount of heat of the connecting portion 22a during the injection and mold releasing. The bottom portion 23 may be cooled by the cooling section 121b provided so as to cover the bottom portion 23, or may be heated by a heater provided in the vicinity of the bottom portion 23.

Furthermore, the temperature adjusting step S2 of the present embodiment includes introducing compressed air into the preform 20 through the first air flowing port 122a after the preform 20 is formed. The outside (outer surface) of the preform 20 is brought into contact with the temperature adjusting cavity of the temperature adjusting mold 121 (the inner wall surface of the temperature adjusting mold 121) by introducing compressed air from the first air flowing port 122a provided in the cooling rod 122 inserted into the preform 20 or the second air flowing port 122b provided in the fitting core 123. Next, the compressed air is continuously introduced from the first air flowing port 122a or the second air flowing port 122b, thereby cooling the preform 20 from the inside (inner surface). The introduced compressed air is discharged through the first air flowing port 122a or the second air flowing port 122b that is not involved with the introduction of the compressed air. For this reason, the outside of the preform 20 (the preform 20) is cooled and temperature-adjusted (from outside) through contact with the temperature adjusting mold 121, while the inside of the preform 20 (the preform 20) is cooled (from inside) by the compressed air being introduced and kept flowing. This makes it possible to cool the preform 20 at a high speed in the temperature adjusting step S2. The preform 20 cooled to a temperature suitable for blow molding in the temperature adjusting section 120 is conveyed to the blow molding section 130 while being held in the neck mold 151.

The blow molding step S3 includes blow-molding the preform 20 with second compressed air (blow air) to manufacture a resin container as illustrated in FIG. 6. The blow molding step S3 of the present embodiment further includes stretching the preform 20 by displacing (lowering) the stretch rod 132. The second compressed air is set to a higher pressure than the compressed air used in the temperature adjusting step S2.

Specifically, the preform 20 conveyed from the temperature adjusting section 120 to the blow molding section 130 is accommodated in the blow molding mold 131, and then the inner surface of the bottom portion 23 is brought into contact with the stretch rod 132 and stretched downward. Thereafter, the preform 20 is blow-molded due to blow air introduced into the preform 20 from the blow core 133 in contact with the neck portion 21. The preform 20 is blow-molded to deform into the shape corresponding to the inner wall surface 131c of the blow cavity defined by the blow molding mold 131, thereby forming the resin container 30. At this time, a distance D1 from the connecting portion 22a to the blow molding mold 131 forming the inner wall surface 131c of the blow cavity is longer than that of the preform having the body portion whose diameter gradually decreases from the neck portion to a specific outer diameter as disclosed in Patent Literature 1. Since the amount of heat of the connecting portion 22a can be sufficiently secured in the temperature adjusting step S2, the connecting portion 22a is appropriately stretched and thinned, and unnecessary thickening that arises in the container shoulder portion 32 can be suppressed. The manufactured resin container is conveyed to the removal section 140 while being held by the neck mold to be removed from the manufacturing apparatus 100 in the container removal step S4.

The preform is manufactured or designed to have an optimal shape through reverse-calculation from the shape of the resin container to be manufactured. The preform having the optimal shape selected is less likely to cause molding defects in the manufacturing of the resin container, and the amount of plastic to be discarded can be reduced. The optimal preform shape is often different for narrow-mouth and wide-mouth containers. For example, in the case of a narrow-mouth container, a preform in a shape in which the upper part of the body portion immediately below the neck portion is strongly narrowed and the lower part of the body portion is gently narrowed toward the bottom portion is preferable. On the other hand, in the case of a wide-mouth container, a preform in a shape in which the body portion immediately below the neck portion is gradually narrowed toward the bottom portion in a substantially tapered shape is preferable. In particular, in a hot parison method (one step type) blow molding method using the amount of heat at the time of injection molding, the distribution of the amount of heat derived from injection molding greatly varies depending on the shape and thickness distribution of the preform, and the stretching degree during blow molding is greatly affected, so the design of the preform shape is very important. However, for example, in the manufacture of a resin container with a diameter size close to a predetermined value (e.g., an intermediate diameter size between the diameters of a wide-mouth container and a narrow-mouth container), it may be difficult to select a preform with an optimal shape.

When a preform with no optimal shape is blow-molded to manufacture a resin container, molding defects are likely to occur. For example, in the case of the shape of the preform disclosed in Patent Literature 1, the distance from the preform to the blow molding mold becomes shorter, the stretch ratio becomes lower, the blow molding becomes unsatisfactory, resulting in a possibility of molding defects. **In** particular, the body portion near the neck portion is close to the neck mold and is therefore likely to be excessively cooled, and further, the distance to the blow molding mold tends to be short, and therefore, the body portion is vulnerable to molding defects (e.g., molding defects in an annular shape or being specifically thick (ring defects) compared to other portions).

According to the above configuration, the connecting portion 22a and the narrow body portion 22b are provided to be reduced in diameter toward the central axis X of the preform 20 when viewed from the neck portion 21. Accordingly, since the distance D1 from the connecting portion 22a and the narrow body portion 22b to the inner wall surface of the blow cavity during the blow molding is increased, the stretch ratio of the connecting portion 22a and the narrow body portion 22b can be secured to be high, and the occurrence of molding defects can be suppressed.

In addition, the neck portion 21 and the connecting portion 22a, and the connecting portion 22a and the narrow body portion 22b are bent in an L-shape, and thus, a portion of the connecting portion 22a which is held to be separated from the temperature adjusting mold 121 increases (the connecting portion 22a is not in contact with the cooling section 121b and is not easily cooled). Therefore, the heat retained in the connecting portion 22a, which is the body portion 22 of the portion connected to the neck portion 21, is easily maintained. This configuration suppresses molding defects that could be caused by insufficient heat retained in the body portion 22 near the neck portion 21.

In the injection molding mold 112 and the manufacturing apparatus 100 for a resin container configured as described above, the neck mold 151 and the connecting-portion forming portion 114a, which are a neck forming portion, and the connecting-portion forming portion 114a and the narrow-body-portion forming portion 114b are connected in an L-shape and form the step-portion forming portion. Thus, by injecting a molten resin into the injection cavity formed by the step-portion forming portion, the preform 20 in which the neck portion 21 and the connecting portion 22a, and the connecting portion 22a and the narrow body portion 22b are bent in an L-shape can be manufactured. The preform 20 with a shape, which can increase the stretch ratio immediately below the neck portion, is blow-molded, and thus it is possible to suppress the occurrence of molding defects. The manufacturing method for a resin container is a method for manufacturing a resin container by blow-molding the above-described preform 20 in a hot parison method. Therefore, it is possible to suppress the occurrence of molding defects in the resin container.

According to the above-described preform 20, the angle θ formed by the central axis X of the preform 20 and the connecting portion 22a ranges from 70° to 90°. In addition, in the injection molding mold 112 described above, the connecting-portion forming portion 114a is configured such that the angle θ that the connecting-portion forming portion 114a forms with respect to the central axis X of the preform 20 ranges from 70° to 90°. Therefore, the distance D1 from the connecting portion 22a and the narrow body portion 22b to the blow cavity becomes longer, and the molding defects caused by excessively small stretch ratio are suppressed.

The temperature adjusting mold 121 having the above-described configuration includes the heater 121a and the cooling section 121b. In addition, in the manufacturing method for a resin container, at least the connecting portion 22a is heated. This makes it possible to sufficiently secure the heat retained in the body portion 22 (the connecting portion 22a) near the neck portion 21. This suppresses molding defects caused by insufficient retained heat.

In the injection molding step S1 of the present embodiment, the preform 20 is released from the injection molding mold 112 at a high temperature, and in the temperature adjusting step S2, compressed air is introduced into the preform 20. The injection molding section 110 of the present embodiment is configured to allow the preform 20 to be released from the injection molding mold 112 at a high temperature, and the temperature adjusting section 120 includes a mechanism for cooling the preform 20 with compressed air or the like. In order to shorten the cycle time for manufacturing resin containers, it is important to shorten the time for the injection molding step S1. Since the preform 20 of the present embodiment is released from the mold at a high temperature, it is possible to shorten the time to be used for the injection molding step S1 and the cycle time to be used for the manufacture of the resin container. When the preform is gradually cooled in the temperature adjusting step S2, appearance defects such as whitening may occur. The outside of the preform 20 is cooled by being in contact with the inner wall surface of the temperature adjusting mold (temperature adjusting pot mold), and the inside of the preform 20 is cooled by introducing compressed air, so the cooling speed of the preform 20 is improved.

Although embodiments of the present disclosure have been described above, the technical scope of the present disclosure, needless to say, should not be construed as being limited by the description of the embodiments. It should be understood by a person skilled in the art that the embodiments are merely examples, and that various modifications of the embodiments are possible within the scope of the invention described in the claims. The technical scope of the present disclosure is determined based on the scope of the invention described in the claims and equivalent scopes thereof.

This application is based on Japanese Patent Application filed on Dec. 21, 2022 (Patent Application No. 2022-204380), the contents of which are incorporated herein by reference.

### REFERENCE SIGNS LIST

20 Preform
21 Neck portion
22 Body portion
22a Connecting portion
22b Narrow body portion
22c Step portion
23 Bottom portion
100 Manufacturing apparatus
110 Injection molding section
111 Injection device
112 Injection molding mold
113 Injection molding core
114 Injection cavity mold
114a Connecting-portion forming portion
114b Narrow-body-portion forming portion
120 Temperature adjusting section
121 Temperature adjusting mold
121a Heater
121b Cooling section
122 Cooling rod
122a First air flowing port
122b Second air flowing port
123 Fitting core
130 Blow molding section
131 Blow molding mold
132 Stretch rod
140 Removal section
150 Transport means
151 Neck mold
D1 Distance

## Claims

1. A preform that is manufactured by an injection molding section of a blow molding apparatus in a hot parison method and is blow-molded into a resin container by a blow molding section, the preform comprising:
a neck portion that forms an opening of the preform;
a body portion that is connected to the neck portion; and
a bottom portion that is connected to the body portion and closes one end of the preform, wherein
the body portion includes a connecting portion connected to the neck portion and a narrow body portion formed with a smaller diameter than the neck portion, and
the neck portion and the connecting portion, and the connecting portion and the narrow body portion are connected in an L-shape and form a step portion.

2. The preform according to claim 1, wherein an angle formed by a central axis of the preform and the connecting portion ranges from 70° to 90°.

3. An injection molding mold that is used to manufacture a preform with an injection molding section of a blow molding apparatus in a hot parison method, wherein
an injection cavity formed by the injection molding mold includes a neck forming portion that forms a neck portion of the preform, a body-portion forming portion that forms a body portion connected to the neck portion, and a bottom-portion forming portion that forms a bottom portion that is connected to the body portion and closes one end of the preform,
the body-portion forming portion includes a connecting-portion forming portion connected to the neck forming portion, and a narrow-body-portion forming portion formed to be narrower than the neck forming portion, and
the neck forming portion and the connecting-portion forming portion, and the connecting-portion forming portion and the narrow-body-portion forming portion are connected in an L-shape and form a step-portion forming portion.

4. The injection molding mold according to claim 3, wherein an angle of the connecting-portion forming portion with respect to a central axis of the preform ranges from 70° to 90°.

5. A temperature adjusting mold for adjusting a temperature of the preform according to claim 1 or 2 to a temperature suitable for blow molding, the temperature adjusting mold comprising:
a heater provided to cover at least the connecting portion; and
a cooling section provided closer to a bottom portion than to the heater.

6. A manufacturing method for manufacturing a resin container by blow-molding the preform according to claim 1 or 2 in a hot parison method, the manufacturing method comprising:
an injection molding step of injecting a molten resin into an injection cavity formed by an injection molding mold and forming the preform;
a temperature adjusting step of adjusting a temperature of the preform to a temperature suitable for blow molding; and
a blow molding step of blow-molding the preform whose temperature has been adjusted.

7. The manufacturing method for a resin container according to claim 6, wherein,
in the injection molding step, the preform is released from the injection molding mold at a high temperature, and
in the temperature adjusting step, compressed air is introduced into the preform.

8. The manufacturing method for a resin container according to claim 6, wherein at least the connecting portion is heated in the temperature adjusting step.

9. A manufacturing apparatus for manufacturing a resin container by blow-molding the preform in the hot parison method, the manufacturing apparatus comprising:
an injection molding section that injects a molten resin into the injection cavity formed by the injection molding mold according to claim 3 or 4 and forms the preform;
a temperature adjusting section that includes a temperature adjusting mold and adjusts a temperature of the preform to a temperature suitable for blow molding; and
a blow molding section that blow-molds the preform whose temperature has been adjusted.

10. The manufacturing apparatus for a resin container according to claim 9, wherein
the injection molding section is configured to allow the preform to be released from the injection molding mold at a high temperature,
the temperature adjusting section includes the temperature adjusting mold including a temperature adjusting cavity in which the preform is to be in contact, and a cooling rod, and
an air flowing port is formed in the cooling rod,
the cooling rod is configured to introduce compressed air from the air flowing port into the preform brought into contact with an inner surface of the temperature adjusting cavity.
